# EUROPÄISCHE PATENTANMELDUNG

(11) **EP 2 853 147 A1**
(43) Veröffentlichungstag der Anmeldung: **01.04.2015**
(21) Anmeldenummer: 14175336.8
(22) Anmeldetag: 02.07.2014
(51) Int. Cl.: A01F 29/12

(54) **Feldhäcksler mit einer Nachbeschleunigungseinrichtung**

(30) Priorität: 27.09.2013 DE 102013110741
(71) Anmelder: CLAAS Selbstfahrende Erntemaschinen GmbH, 33428 Harsewinkel (DE)
(72) Erfinder: Kleingräber, Karl-Josef, 48231 Warendorf (DE); Poppenborg, Richard Erich, 48231 Warendorf (DE)

(57) **Zusammenfassung**

Feldhäcksler (1) mit einer Nachbeschleunigungseinrichtung (9), welche einen durch eine Auswurfeinrichtung (10) abgebbaren Erntegutstrom mittels rotierender Förderelementen (21) mit kinetischer Energie beaufschlagt, wobei die Nachbeschleunigungseinrichtung (9) zumindest ein zusätzliches durch eine Steuerungseinrichtung (15) ansteuerbares Mittel aufweist, mittels dessen der Volumenstrom eines durch die Nachbeschleunigungseinrichtung (9) generierten Luftstromes in Abhängigkeit von zumindest einem Erntegutparameter variierbar ist.

## Beschreibung

Die vorliegende Erfindung betrifft einen Feldhäcksler mit einer Nachbeschleunigungseinrichtung gemäß dem Oberbegriff des Anspruches 1.

Aus der DE 10 2009 002 092 A1 ist ein Feldhäcksler mit einer Nachbeschleunigungseinrichtung gemäß dem Oberbegriffes des Anspruches 1 bekannt. Der Feldhäcksler weist eine Nachbeschleunigungseinrichtung auf, durch welche ein durch eine Auswurfeinrichtung abgebbarer Erntegutstrom mittels rotierender schaufelförmiger Förderelemente mit kinetischer Energie beaufschlagt wird. Zusätzlich ist ein Luftgebläse zur Bereitstellung eines Luftstromes vorgesehen, durch den das von der Nachbeschleunigungseinrichtung geförderte Erntegut mit einem in Förderrichtung des Erntegutes gerichteten Luftstrom beaufschlagt wird. Durch den zusätzlichen, von dem Luftgebläse erzeugten Luftstrom soll die Förderwirkung verbessert und die Wurfweite erhöht werden. Gemäß der DE 10 2009 002 092 A1 ist es vorgesehen, den von dem Luftgebläse erzeugten Luftstrom in dem Fall zu drosseln, wenn die erzielte Wurfweite zu groß ist, was bei einer Erntesituation der Fall ist, wenn der Feldhäcksler einen Transportwagen direkt hinter sich herzieht. Die Beaufschlagung des Gutstromes mit einem zusätzlichen Luftstrom wirkt sich jedoch nachteilig auf das Strömungsverhalten des Erntegutes im Inneren der Auswurfeinrichtung aus. So kann es insbesondere bei leichtem Erntegut, wie trockenem Gras, zu einer Haufenbildung in der Auswurfeinrichtung kommen, die zu einer Querschnittsverringerung und somit einer Verstopfung im Inneren der Auswurfeinrichtung führt.

Der Erfindung liegt somit die Aufgabe zu Grunde, eine Nachbeschleunigungseinrichtung für einen Feldhäcksler der eingangs genannten Art derart weiterzuentwickeln, dass sich dieser durch einen verbesserten Gutfluss in einer Auswurfeinrichtung auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem kennzeichnenden Teil des Anspruches 1 wird vorgeschlagen, dass die Nachbeschleunigungseinrichtung zumindest ein zusätzliches durch eine Steuerungseinrichtung ansteuerbares Mittel aufweist, mittels dessen der Volumenstrom eines durch die Nachbeschleunigungseinrichtung generierten Luftstromes in Abhängigkeit von zumindest einem Erntegutparameter variierbar ist. Überraschenderweise hat es sich bei der Verarbeitung insbesondere von leichtem, trockenem Erntegut durch den Feldhäcksler gezeigt, dass die auf das Erntegut durch den Nachbeschleuniger übertragbare kinetische Energie auf Grund der geringen Masse des Erntegutes gering ist, so dass der Einfluss des von der Nachbeschleunigungseinrichtung erzeugten Luftstromes, der in die Auswurfeinrichtung eingeleitet wird, in dieser Erntesituation deutlich zunimmt. Die Einstellbarkeit des von der Nachbeschleunigungseinrichtung generierten Luftvolumenstroms in Abhängigkeit von zumindest einem Erntegutparameter trägt dazu bei, dass der Gutfluss in der Auswurfeinrichtung insbesondere bei leichtem Erntegut wie trockenem Gras optimiert wird. Insbesondere lässt sich hierdurch das Auftreten von Verstopfungen in Folge einer Beaufschlagung mit einem zu großen Luftvolumenstrom verhindern. Der Luftstrom wird von der Nachbeschleunigungseinrichtung durch das Ansaugen von Umgebungsluft durch im Gehäuse der Nachbeschleunigungseinrichtung vorhandenen Öffnungen erzeugt.

So kann das Mittel als mindestens ein mit veränderbarer Öffnungsweite ausgeführter Lufteinlass im Gehäuse der Nachbeschleunigungseinrichtung ausgeführt sein. Damit lässt sich auf einfache Weise der Volumenstrom steuern, welcher von der Nachbeschleunigungseinrichtung auf Grund der Rotation von Läufern, mit denen die kinetische Energie auf das Erntegut übertragen wird, angesogen wird. Die Drehzahl der Nachbeschleunigungseinrichtung kann dabei unverändert bleiben.

Vorzugsweise kann das Mittel durch einen Aktor betätigbar sein. Der Aktor ist von der Steuerungseinrichtung ansteuerbar. Die Veränderung des Volumenstromes kann somit durch eine Bedienperson von der Kabine des Feldhäckslers aus vorgenommen werden. Die Ansteuerung des Aktors ist im laufenden Ernteprozess jederzeit durchführbar, so dass zeitnah auf Änderungen von Erntegutparametern reagiert werden kann. Insbesondere kann die Öffnungsweite des Lufteinlasses mittels einer Blende veränderbar sein. Eine Blende erlaubt eine stufenlose Variation des Volumenstroms, der von der Nachbeschleunigungseinrichtung durch die Lufteinlässe angesaugt und auf das zu fördernde Erntegut übertragen wird.

In bevorzugter Weiterbildung kann der Lufteinlass durch ein Verschlusselement vollständig verschließbar sein.

Vorteilhafterweise kann die Steuerungseinrichtung mit einer Sensorik zur optischen Erfassung des in der Auswurfeinrichtung geförderten Erntegutes verbunden sein. Mittels der Sensorik kann der Erntegutstrom in der Auswurfeinrichtung erfasst und hinsichtlich seiner Eigenschaften überwacht werden. So lassen sich beispielweise Unregelmäßigkeiten im die Auswurfeinrichtung passierenden Gutfluss feststellen, die ein Indiz dafür darstellen, dass es bedingt durch die Größe des erzeugten Luftvolumenstromes zu einer Haufenbildung in der Auswurfeinrichtung kommen kann.

Hierzu kann die Sensorik als zumindest eine Kamera ausgeführt sein. Die zumindest eine Kamera kann dabei an einem die Auswurfeinrichtung begrenzenden Rahmenabschnitt angeordnet sein. In dem Rahmenabschnitt ist eine Öffnung vorgesehen, welche durch eine transparente, verschleißresistente Abdeckung verschlossen ist. Durch diese Abdeckung hindurch kann die zumindest eine Kamera Aufnahmen der Struktur des Erntegutstromes machen. Mittels der zumindest einen Kamera ist eine Analyse der Struktur des Erntegutstromes in Echtzeit möglich, um den Einfluss des Luftstromes auf das geförderte Erntegut erkennen und beurteilen zu können. Die zumindest eine Kamera kann dadurch die Schichtdicke des geförderten Erntegutstromes erfassen. Des Weiteren ist die Dichte und/oder Homogenität des Erntegutstromes erfassbar.

Vorzugsweise kann die Steuerungseinrichtung zur automatisierten Ansteuerung der Aktorik eingerichtet sein. Hierzu sind von der Sensorik bereitgestellte Signale von der Steuerungseinrichtung auswertbar. Durch einen Vergleich von den erfassten Erntegutstrom darstellenden Werten mit einen optimalen Gutfluss repräsentierenden Werten sind durch die Steuerungseinrichtung Einstellparameter ableitbar, mittels derer die Aktorik zur Betätigung des Mittels ansteuerbar ist. Im einfachsten Fall findet durch die Steuerungseinrichtung ein Soll-Ist-Wert-Vergleich statt. Eine komplexere Auswertung durch die Steuerungseinrichtung kann vorsehen, dass der Vergleich in Form einer Bildanalyse durchführbar ist. Das Ergebnis dieser Analyse wird entsprechend für die Ansteuerung der Aktoren verwendet, mit welchen die Mittel zur Veränderung der Öffnungsweite eines Lufteinlasses betätigbar sind. Die Ansteuerung der Mittel kann dabei unabhängig voneinander erfolgen, wenn mehr als ein Lufteinlass am Gehäuse der Nachbeschleunigungseinrichtung vorgesehen ist.

Des Weiteren betrifft die Erfindung ein Verfahren zum Betreiben einer Nachbeschleunigungseinrichtung, durch die ein durch eine Auswurfeinrichtung abgebbarer Erntegutstrom mittels rotierender Förderelemente mit kinetischer Energie beaufschlagt wird.

Gemäß dem Anspruch 9 wird zur Lösung der eingangs formulierten Aufgabe vorgeschlagen, dass ein durch die Nachbeschleunigungseinrichtung generierter Luftstrom mittels zumindest eines durch eine Steuerungseinrichtung ansteuerbaren Mittels in Abhängigkeit von zumindest einem Erntegutparameter hinsichtlich seines Volumens variiert wird. Durch die Anpassung des Luftvolumenstromes wird der Gutfluss in der Auswurfeinrichtung in Abhängig von zumindest einem Erntegutparameter und/oder einem Betriebsparameter beeinflusst, um einen optimierten Gutfluss zu erreichen. Insbesondere können Materialanhäufungen im Inneren der Auswurfeinrichtung vermieden oder zumindest reduziert werden, wenn ein an einen Erntegutparameter angepasster Luftvolumenstrom erzeugt wird.

Vorzugsweise kann als ein Erntegutparameter die Erntegutart erfasst werden. Dies geschieht vorzugsweise durch eine entsprechende Eingabe in die Steuerungseinrichtung, die zu diesem Zweck eine Eingabe-Ausgabeeinheit aufweist. Somit die Steuerungseinrichtung die Mittel derart ansteuern, dass der Luftvolumenstrom bei schwererem Erntegut erhöht wird, während bei leichterem Erntegut der Luftvolumenstrom reduziert wird. Eine Erfassung des Erntegutparameters Erntegutart kann auch sensorisch durchgeführt werden.

Des Weiteren kann als ein Erntegutparameter die Struktur des die Auswurfeinrichtung passierenden Erntegutstroms erfasst werden. Die Homogenität der Struktur des Erntegutstromes kann ausgewertet werden, um den Einfluss des Luftstromes auf das Strömungsverhalten des Erntegutstroms zu bestimmen. Zusätzlich oder alternativ kann die Schichtdicke des Erntegutstromes ausgewertet werden, um den Einfluss des Luftstromes auf das Strömungsverhalten des Erntegutstroms zu bestimmen.

Dabei kann die Struktur des die Auswurfeinrichtung passierenden Erntegutstroms optisch erfasst und von der Steuerungseinrichtung ausgewertet werden. Eine optische Erfassung ermöglicht eine automatisierte Auswertung durch die Steuerungseinrichtung die mit einer automatischen Ansteuerung der Mittel zur Veränderung des Luftvolumenstromes einhergehen kann. Die Auswertung wird vorzugsweise durch eine Bildanalysesoftware durchgeführt, die in der Steuerungseinrichtung hinterlegbar ist. Anhand der Analyse wird beurteilt, ob der von der Nachbeschleunigungseinrichtung generierte Luftstrom verändert werden muss. Hierzu werden die durch die Steuerungseinrichtung ansteuerbaren Mittel entsprechend angesteuert, um den Luftstrom zu variieren.

Die vorliegende Erfindung wird nachstehend anhand eines in den Zeichnungen dargestellten Ausführungsbeispieles näher erläutert.

Es zeigen:
- Fig. 1: eine schematische Ansicht eines Feldhäckslers;
- Fig. 2: eine Ansicht eines Gehäuses einer Nachbeschleunigereinrichtung.

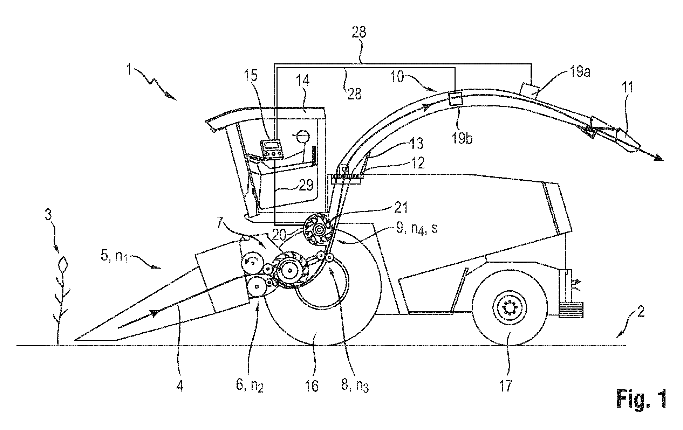

Fig. 1 zeigt einen Feldhäcksler 1 in schematischer Ansicht von der Seite. Der Feldhäcksler 1 fährt über ein Feld 2, um einen gewachsenen Pflanzen bestand 3 (typischerweise Mais) zu ernten. Auf für sich bekannte Weise ist der Feldhäcksler 1 mit einem Erntevorsatz 5 ausgestattet, um mit diesem den oberen Teil der Maispflanze 3 vom Feld zu trennen und dem Feldhäcksler 1 zur weiteren Bearbeitung als Erntegut 4 zuzuführen. Das so aufgenommene Erntegut 4 wird entlang der eingezeichneten, mit Pfeilen versehenen Linie durch den Feldhäcksler 1 gefördert, um anschließend auf ein (hier nicht dargestelltes) Transportfahrzeug überladen zu werden.

Dem Erntevorsatz 5 bezogen auf die Gutstromrichtung nachgelagert (stromabwärts) befindet sich ein Einzugsorgan 6, welches das Erntegut 4 vorpresst und mit einer definierten Geschwindigkeit einem Häckselaggregat 7 zuführt. Das Häckselaggregat 7 ist mit einer rotierenden, mit Messern bestückten Häckseltrommel ausgestattet, um das Erntegut 4 in Zusammenwirkung mit einer ruhenden Gegenschneide in Partikel gewünschter Schnittlänge zu zerkleinern. Das so gehäckselte Erntegut 4 gelangt durch einen unterhalb einer Fahrerkabine 14 nach hinten aufsteigenden Förderschacht durch eine (optionale) Konditioniereinrichtung 8, um dann von einer Nachbeschleunigereinrichtung 9 auf eine zum Auswurf durch eine Auswurfeinrichtung 10 geeignete Geschwindigkeit beschleunigt zu werden.

Der Erntevorsatz 5, das Einzugsorgan 6, die Konditioniereinrichtung 8 und/oder die Nachbeschleunigereinrichtung 9 sind in deren Geschwindigkeiten, das heißt insbesondere in deren Drehzahlen n1, n2, n3, n4 einstellbar, um an diesen Funktionseinrichtungen insbesondere die Fördergeschwindigkeit des Ernteguts, die erzielte Schnittlänge, eine Zerkleinerungswirkung und/oder die Auswurfleistung verändern zu können. An der Nachbeschleunigereinrichtung 9 ist zudem eine Spaltweite s (zwischen Auswurfpaddel 21 und Gehäuse 20) veränderbar, womit ebenfalls dessen erzielbare Wurfleistung veränderbar ist.

Die Auswurfeinrichtung 10 in Form eines sogenannten "Auswurfkrümmers" ist auf für sich bekannte Weise über einen Höhenstellzylinder 13 in deren Höhe verstellbar, über einen Drehkranz 12 um eine vertikale Drehachse seitlich schwenkbar und weist am maschinenabgewandten Ende der Auswurfeinrichtung 10 eine Auswurfklappe 11 auf, die ebenfalls schwenkbar ist, um einen Abwurfwinkel des ausgeworfenen Ernteguts 4 vorzugeben. Auf der Auswurfeinrichtung 10 ist ein optischer Sensor, der als eine Kamera 19 ausgeführt ist, angeordnet, welcher durch eine transparente, verschleißresistente Abdeckung in der Wandung der Auswurfeinrichtung 10 den Erntegutstrom erfassen kann. Es sei angemerkt, dass der Feldhäcksler 1 in Fig. 1 aus Darstellungsgründen mit nach hinten geschwenkter Auswurfeinrichtung 10 gezeigt ist. Bei normaler Erntefahrt (über ein bereits angeschnittenes Feld) ist die Auswurfeinrichtung 10 üblicherweise seitlich mittels der Drehkranzes 12 verschwenkt, ragt also aus der Zeichnungsebene heraus (oder in diese hinein).

Ein heckseitig angeordneter Antriebsmotor 18 dient zum Antrieb der Arbeitsorgane des Feldhäckslers 1 sowie zum Fahrantrieb der Vorderräder 16 und gegebenenfalls der Hinterräder 17 (bei Zuschaltung eines Allradantriebs) sowie zur Versorgung von sonstigen Funktionseinrichtungen.

In der Fahrerkabine 14 ist für einen Fahrer zugänglich eine Steuer-, Bedien- und Anzeigeeinrichtung 15 angeordnet, die mit den wesentlichen Funktionseinrichtungen des Feldhäckslers 1 in Signalverbindung steht, so dass der Fahrer über die Steuerungs-, Bedien- und Anzeigeeinrichtung 15 auf eine Vielzahl von an der Maschine verfügbaren Funktionen zugreifen, insbesondere diese überwachen und steuern kann. Es kann vorgesehen sein, dass einige der Funktionen ergänzend oder alternativ über zusätzliche in der Fahrerkabine 14 angeordnete Bedienelemente steuerbar sind, wie beispielsweise über Bedienhebel, Schaltknöpfe, Drehregler und dergleichen, um einen besonders schnellen Zugriff darauf zu haben.

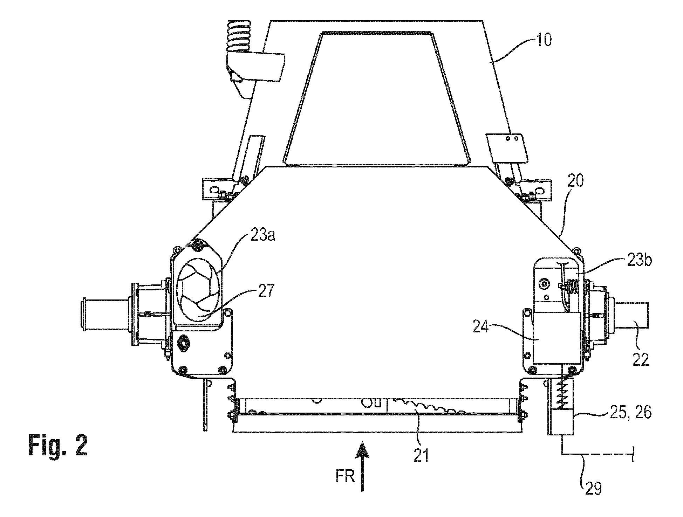

In Fig. 2 ist das Gehäuse 20 der Nachbeschleunigungseinrichtung 9 dargestellt. Im Inneren des Gehäuses 20 befindet sich ein schaufelradförmiger Beschleuniger 21. Durch den Beschleuniger 21 wird in Förderrichtung FR vorbeiströmendes Erntegut 4 mit kinetischer Energie beaufschlagt, um eine ausreichende Wurfweite beim Austragen aus der Auswurfeinrichtung 10 zu erzielen. Der Beschleuniger 21 ist auf einer Antriebswelle 22 angeordnet, welche in dem Gehäuse 20 in horizontaler Richtung verschieblich gelagert ist, um die Spaltweite s verändern zu können. Weiterhin ist der Darstellung in Fig. 2 zu entnehmen, dass beidseitig des Gehäuses 20 Lufteinlässe 23a, 23b vorgesehen sind. Durch diese Lufteinlässe 23a, 23b wird in Folge der Rotation des Beschleunigers 21 ein Luftstrom eingesogen, der zusätzlich auf das Erntegut 4 einwirkt und dessen Strömungsverhalten beim Passieren der Auswurfeinrichtung 10 beeinflusst.

Um den Volumenstrom, der von dem Beschleuniger 21 angesogen wird zu reduzieren, ist vorgesehen, dass Mittel vorgesehen sind, durch welche die Lufteinlässe 23a, 23b teilweise oder vollständig verschließbar sind. So ist beispielhaft dem Lufteinlass 23a auf der einen Seite ein als Verschlusselement 24 ausgeführtes Mittel zugeordnet, welches durch einen Aktor 25 betätigbar ist. Das Verschlusselement 24 lässt sich durch den Aktor 25 in unterschiedliche Positionen überführen, so dass der Lufteinlass 23a vollständig geöffnet, teilweise geöffnet (wie dargestellt) oder vollständig geschlossen sein kann. Als Aktor 25 kann beispielsweise ein hydraulisch oder pneumatisch betätigbarer Hubzylinder 27 vorgesehen sein, der durch eine entsprechende Ansteuerung eine stufenlose Verstellung der Position des Verschlusselements 24 ermöglicht.

Eine Alternative ist der Darstellung in Fig. 2 auf der anderen Seite zu entnehmen, an welcher der Lufteinlass 23b durch eine Blende 27 teilweise verschließbar ist. Die Blende 27 ist, wie auch das Verschlusselement 26, durch einen Aktor 25 verstellbar, um die Öffnungsweite des Lufteinlasses 23a, 23b variieren zu können. Die gemeinsame Darstellung der Alternativen der Mittel, durch die die Lufteinlässe 23a, 23b teilweise oder vollständig verschließbar sind, stellt keine Beschränkung auf diese Kombination dar. Üblicherweise wird lediglich eine Variante des Mittels an der Nachbeschleunigereinrichtung 9 zum Tragen kommen, um die Öffnungsweite des Lufteinlasses 23a, 23b variieren zu können.

Die Aktoren 25 sind durch die Steuerungseinrichtung 15 ansteuerbar, mit der die Aktoren 25 durch Signalleitungen 29 verbunden sind. Hierzu weist die Steuerungseinrichtung 15 eine Prozessoreinrichtung sowie eine Speichereinrichtung auf, mittels der in der Speichereinrichtung hinterlegbare Softwarealgorithmen verarbeitbar sind. Die Ansteuerung der Aktoren 25 erfolgt in Abhängigkeit von zumindest einem Erntegutparameter wie der Erntegutart, die von dem Feldhäcksler 1 verarbeitet wird. Als ein weiterer Erntegutparameter kann auch die Feuchtigkeit des Erntegutes 4 herangezogen werden, die ebenfalls sensorisch erfassbar ist. Hierzu kann ein zusätzlicher Feuchtigkeitssensor an der Auswurfeinrichtung angeordnet sein, dessen Messsignale an die Steuerungseinrichtung 15 zur Auswertung übertragen werden.

Ein alternativer oder weiterer Erntegutparameter stellt die Struktur des die Auswurfeinrichtung 10 durchströmenden Erntegutes 4 dar. Die Struktur des die Auswurfeinrichtung 10 durchströmenden Erntegutes 4 wird durch zumindest einen als Kamera 19a, 19b ausgeführten optischen Sensor erfasst. In dem in Fig. 1 dargestellten Ausführungsbeispiel sind zwei Kameras 19a, 19b an der Auswurfeinrichtung 10 angeordnet. Die Anordnung der Kameras 19a und 19b ist oberhalb und seitlich die Auswurfeinrichtung 10 durchströmenden Erntegutes 4 vorgesehen. Denkbar ist auch die Anordnung einer Kamera, welche den Gutstrom von der Unterseite der Auswurfeinrichtung 10 beobachtet. Grundsätzlich ist die Anordnung mindestens einer Kamera 19b an einem die Auswurfeinrichtung 10 seitlich begrenzenden Rahmenabschnitt vorteilhaft, da diese zugleich die Schichtdicke und die Homogenität der Struktur des Erntegutstromes erfassen kann. Bilder dieses Erntegutstromes, die von der zumindest einen Kamera 19a, 19b bereitgestellt werden, werden über eine oder mehrere Signalleitung(en) 28 zur Auswertung an die Steuerungseinrichtung 15 übertragen. Die Steuerungseinrichtung 15 kann auf ihrer Anzeigeeinrichtung Aufnahmen des Erntegutstromes 4 darstellen, welche von einer Bedienperson des Feldhäckslers 1 als Kriterium des Einflusses des von der Nachbeschleunigungseinrichtung 9 erzeugten Luftvolumenstromes herangezogen werden können. Auf dieser Basis kann sich die Bedienperson für eine Veränderung des Volumenstromes des durch die Nachbeschleunigungsvorrichtung 9 generierten Luftstromes entscheiden. Durch eine Eingabe über die Steuerungs- Bedien- und Anzeigevorrichtung 15 können die Aktoren 25 entsprechend angesteuert werden, um den Volumenstrom zu erhöhen oder zu reduzieren. Beispielhaft sei hierfür der Einfluss des Luftstromes auf trockenes, leichtes Erntegut wie gehäckseltes Gras genannt, welches durch den von der Nachbeschleunigungsvorrichtung 9 generierten Luftstrom eine stärkere Beeinflussung erfährt, als durch die von dem Beschleuniger 21 auf das Erntegut aufgebrachte kinetische Energie. Die Beeinflussung des Strömungsverhaltens von leichtem Erntegutes durch den Luftstromkann zu einer Verstopfung durch Haufenbildung in der Auswurfeinrichtung 10 führen. Wird der von der Nachbeschleunigungsvorrichtung 9 erzeugte Luftstrom durch eine entsprechende Ansteuerung der Aktoren 25 zumindest reduziert, so lässt sich der Gutfluss in der Auswurfeinrichtung 10 optimieren.

Dieser Vorgang ließe sich auch automatisieren, indem Vergleichswerte in der Speichereinrichtung der Steuerungseinrichtung 15 hinterlegbar sind, die unterschiedliche Erntegutparameter repräsentieren. Durch kontinuierlichen Vergleich des sensorisch erfassten Erntegutparameters mit einem entsprechenden Vergleichswert lässt sich eine Abweichung von einem Sollwert feststellen. Mit den Vergleichswerten sind Steuersignale verknüpfbar, durch die eine entsprechende Ansteuerung der Aktoren 25 durchführbar ist, um den Luftvolumenstrom an eine Änderung eines Erntegutparameters anzupassen.

### Bezugszeichenliste

| | | | |
|---|---|---|---|
| 1 | Feldhäcksler | 29 | Signalleitung |
| 2 | Feld | n₁ | Drehzahl |
| 3 | Pflanzenbestand | n₂ | Drehzahl |
| 4 | Erntegut | n₃ | Drehzahl |
| 5 | Erntevorsatz | n₄ | Drehzahl |
| 6 | Einzugsorgan | s | Spaltweite |
| 7 | Häckselaggregat | | |
| 8 | Konditioniereinrichtung | | |
| 9 | Nachbeschleunigereinrichtung | | |
| 10 | Auswurfeinrichtung | | |
| 11 | Auswurfklappe | | |
| 12 | Drehkranz | | |
| 13 | Höhenstellzylinder | | |
| 14 | Fahrerkabine | | |
| 15 | Steuerung-, Bedien- und Anzeigeeinrichtung | | |
| 16 | Vorderräder | | |
| 17 | Hinterräder | | |
| 18 | Antriebsmotor | | |
| 19a | Kamera | | |
| 19b | Kamera | | |
| 20 | Gehäuse | | |
| 21 | Beschleuniger | | |
| 22 | Antriebswelle | | |
| 23a | Lufteinlass | | |
| 23b | Lufteinlass | | |
| 24 | Verschlusselement | | |
| 25 | Aktor | | |
| 26 | Hubzylinder | | |
| 27 | Blende | | |
| 28 | Signalleitung | | |

## Patentansprüche

1. Feldhäcksler (1) mit einer Nachbeschleunigungseinrichtung (9), welche einen durch eine Auswurfeinrichtung (10) abgebbaren Erntegutstrom mittels rotierender Förderelementen (21) mit kinetischer Energie beaufschlagt, **dadurch gekennzeichnet, dass** die Nachbeschleunigungseinrichtung (9) zumindest ein zusätzliches durch eine Steuerungseinrichtung (15) ansteuerbares Mittel aufweist, mittels dessen der Volumenstrom eines durch die Nachbeschleunigungseinrichtung (9) generierten Luftstromes in Abhängigkeit von zumindest einem Erntegutparameter variierbar ist.

2. Feldhäcksler (1) nach Anspruch 1, **dadurch gekennzeichnet, dass** das Mittel als mindestens ein mit veränderbarer Öffnungsweite ausgeführter Lufteinlass (23a, 23b) im Gehäuse (20) der Nachbeschleunigungseinrichtung (9) ausgeführt ist.

3. Feldhäcksler (1) nach einem der Ansprüche 1 oder 2, **dadurch gekennzeichnet, dass** das Mittel durch einen Aktor (25, 26) betätigbar ist.

4. Feldhäcksler (1) nach Anspruch 3, **dadurch gekennzeichnet, dass** die Öffnungsweite des Lufteinlasses (23a, 23b) mittels einer Blende (27) veränderbar ist.

5. Feldhäcksler (1) nach einem der Ansprüche 2 bis 4, **dadurch gekennzeichnet, dass** der Lufteinlass (23a, 23b) durch ein Verschlusselement (24) vollständig verschließbar ist.

6. Feldhäcksler (1) nach einem der Ansprüche 1 bis 5, **dadurch gekennzeichnet, dass** die Steuerungseinrichtung (15) mit einer Sensorik zur optischen Erfassung von in der Auswurfeinrichtung (10) geförderten Erntegutes (4) verbunden ist.

7. Feldhäcksler (1) nach Anspruch 6, **dadurch gekennzeichnet, dass** die Sensorik als zumindest eine Kamera (19a, 19b) ausgeführt ist.

8. Feldhäcksler (1) nach einem der Ansprüche 3 bis 5, **dadurch gekennzeichnet, dass** die Steuerungseinrichtung (15) zur automatisierten Ansteuerung des Aktors (25) eingerichtet ist.

9. Verfahren zum Betreiben eines Feldhäcksler (1) mit einer Nachbeschleunigungseinrichtung (9), durch die ein durch eine Auswurfeinrichtung (10) abgebbarer Erntegutstrom mittels rotierender Förderelemente (21) mit kinetischer Energie beaufschlagt wird, **dadurch gekennzeichnet, dass** ein durch die Nachbeschleunigungseinrichtung (9) generierter Luftstrom mittels zumindest eines durch eine Steuerungseinrichtung (15) ansteuerbaren Mittels (25,26) in Abhängigkeit von zumindest einem Erntegutparameter hinsichtlich seines Volumens variiert wird.

10. Verfahren nach Anspruch 9, **dadurch gekennzeichnet, dass** als ein Erntegutparameter die Erntegutart erfasst wird.

11. Verfahren nach einem der Ansprüche 9 oder 10, **dadurch gekennzeichnet, dass** als ein Erntegutparameter die Struktur des die Auswurfeinrichtung (10) passierenden Erntegutstroms erfasst wird.

12. Verfahren nach einem der Ansprüche 9 bis 11, **dadurch gekennzeichnet, dass** der mindestens eine Erntegutparameter von einer Sensorik optisch erfasst und von der Steuerungseinrichtung (15) ausgewertet wird.
